# EUROPÄISCHE PATENTANMELDUNG

(11) **EP 0 556 542 A2**
(43) Veröffentlichungstag der Anmeldung: **25.08.1993**
(21) Anmeldenummer: 93100128.3
(22) Anmeldetag: 07.01.1993
(51) Int. Cl.: G01M 3/20, G01M 3/32

(54) **Lecksucheinrichtung und Betriebsverfahren dazu**

(30) Priorität: 19.02.1992 DE 4204960
(71) Anmelder: LEYBOLD AKTIENGESELLSCHAFT, D-63450 Hanau (DE)
(72) Erfinder: Flosbach, Rudolf, W-5272 Wipperfürth (DE)
(74) Vertreter: Leineweber, Jürgen, Dipl.-Phys.

(57) **Zusammenfassung**

Die Erfindung betrifft eine Einrichtung zur Feststellung von Lecks in der Wandung eines offenen Prüflings (17) mit einer der Form des Prüflings angepaßten, mit Dichtmitteln ausgerüsteten Aufnahme (16), in welcher bei ordnungsgemäß eingesetztem Prüfling zwei durch die auf Lecks zu prüfende Wandung getrennte Räume (11, 23) vorhanden sind, wobei den Räumen Ventile zum Anschluß von Pumpen, Meß- oder Überwachungsgeräten, Versorgungsgeräten und/oder dergleichen zugeordnet sind; um eine Lecksuche mit hohen Taktzahlen durchführen zu können, wird vorgeschlagen, daß die Einrichtung mit mehreren Prüflingsaufnahmen (6) ausgerüstet ist und daß mindestens ein Schliffplattenpaar (3, 4; 51, 52; 53, 54) zur Übernahme von Ventilfunktionen vorgesehen ist.

## Beschreibung

Die Erfindung betrifft eine Lecksucheinrichtung, insbesondere entsprechend dem Oberbegriff des Patentanspruchs 2. Außerdem bezieht sich die Erfindung auf ein Verfahren zum Betrieb dieser Einrichtung.

Aus Qualitäts-Sicherheits- oder Umweltschutzgründen wird es immer häufiger erforderlich, daß Hersteller von mit Flüssigkeiten, Gasen oder Gefahrenstoffen gefüllten Behältern die Dichtheit dieser Behälter sicherstellen müssen. Behälter dieser Art können beispielsweise Dosen, vorzugsweise unter Druck stehende Dosen (Spraydosen, Getränkedosen, Fässer usw.), oder auch Gehäuse oder Kapseln sein, die umweltunverträgliche Stoffe, wie z.B. Fluide enthalten. Die Lecksuche kann an den geschlossenen Behältern nach ihrer Herstellung durchgeführt werden. Es besteht aber auch die Möglichkeit, nur besonders kritische Teile der Behälter, beispielsweise Ventile oder die vorgestanzten Deckel von Getränkedosen, vor dem Verschließen des Behälters auf Lecks zu untersuchen. Unter einem "offenen Prüfling" soll ein Bauteil verstanden werden, das nach einer Verbindung mit einem weiteren Bauteil einen Hohlkörper bildet und bei dem im Gegensatz zu einem geschlossenen Prüfling (Hohlkörper) noch beide Seiten der auf Lecks zu untersuchenden Wandungsbereiche zugänglich sind.

Aus der DE-OS 28 02 645 ist eine Einrichtung zur Untersuchung der Wandungen von offenen Prüflingen auf Dichtheit bekannt, welche mit einer dem Prüfling in eine seiner Form angepaßten Aufnahme ausgerüstet ist. Der Prüfling wird in diese Aufnahme derart eingesetzt, daß zwei durch die zu prüfende Wandung getrennte Räume entstehen. Nach dem Einsatz des Prüflings in seine Aufnahme werden in den beiden Räumen unterschiedliche Drücke erzeugt. Ist in dem Raum mit dem höheren Druck ein Testgas vorhanden, dann gelangt dieses Gas in den Raum mit dem niedrigeren Druck, wenn ein Leck vorhanden ist. Der Raum mit dem niedrigeren Druck ist an einen testgasspezifischen Detektor angeschlossen, der im Falle des Vorhandenseins eines Lecks Signale abgibt und somit undichte Prüflinge erkennen läßt.

Einrichtungen zur Durchführung derartiger Lecksuchverfahren erfordern einen relativ hohen technischen Aufwand. Insbesondere ist eine Vielzahl von Ventilen erforderlich, mit denen der Anschluß von Pumpen, Meßgeräten, Testgas-Versorgungsgeräten usw. gesteuert werden muß. Werden zur Durchführung einer besonders empfindlichen Lecksuche Vakuumpumpen eingesetzt und Helium als Testgas verwendet, dann sind an die Ventile hohe Anforderungen bezüglich Dichtheit und Lebensdauer zu stellen. Dieses gilt insbesondere dann, wenn hohe Taktzahlen und kurze Taktzeiten erreicht werden sollen, da selbst Ventile mit Schaltzahlen, die in der Größenordnung von einigen Hunderttausend liegen, häufig defekt gehen und ausgetauscht werden müssen.

Der vorliegenden Erfindung liegt die Aufgabe zugrunde, bei der Lecksuche an offenen Prüflingen die mit dem Einsatz von Ventilen verbundenen Nachteile zu beseitigen.

Erfindungsgemäß wird diese Aufgabe durch die Anwendung der Schliffplattenpaartechnik bei der Lecksuche gelöst. Ein Schliffplattenpaar kann die Funktion einer Vielzahl von Ventilen übernehmen. Der Einsatz dieser Technik ermöglicht es, eine Lecksucheinrichtung mit mehreren Prüflingsaufnahmen auszurüsten und zum Beispiel die Heliumlecksuche an offenen Bauteilen mit extrem hohen Taktzahlen und kurzen Taktzeiten durchzuführen. Der Einsatz von Ventilen mit begrenzten Schaltzahlen erübrigt sich weitestgehend. Nur im Störfall werden konventionelle Ventile geschaltet.

Weitere Vorteile und Einzelheiten der Erfindung sollen anhand von in den Figuren 1 bis 5 dargestellten Ausführungsbeispielen erläutert werden. Es zeigen
- Figur 1 eine Ansicht eines Ausführungsbeispieles nach der Erfindung,
- Figur 2 einen Teilschnitt durch ein weiteres Ausführungsdetail,
- Figuren 3 a und 3 b ein Schliffplattenpaar, das für den Einsatz bei einem Ausführungsbeispiel mit sechs Prüflingsaufnahmen geeignet ist, und
- Figuren 4 und 5 schematische Darstellungen zu einem Ausführungsbeispiel mit zwölf Prüflingsaufnahmen.

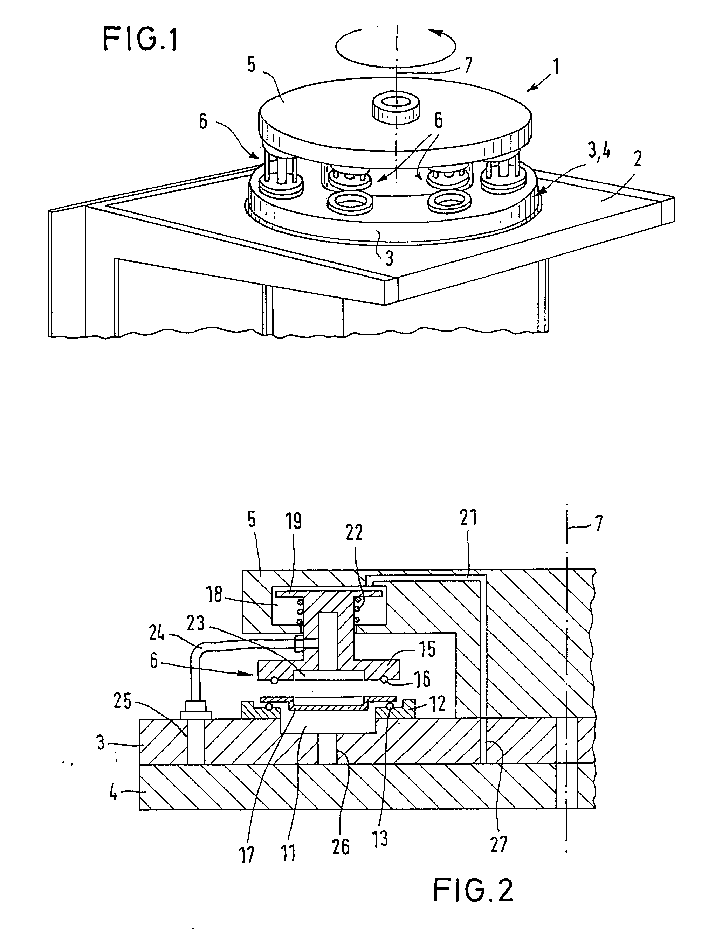

Das erfindungsgemäß gestaltete Ausführungsbeispiel eines Lecksuchgerätes 1 nach Figur 1 stützt sich auf einem Arbeitsplatz 2 ab. Es ist mit nur einem Schliffplattenpaar 3, 4 ausgerüstet. Die obere, rotierende Schliffplatte 3 trägt ein pilzförmiges Bauteil 5. Zwischen dem Rand dieses Bauteiles 5 und der oberen Schliffplatte 3 befinden sich Prüflingsaufnahmen 6. Die Drehachse des Systems ist mit 7 bezeichnet. Die für den Betrieb der Einrichtung notwendigen Elemente, wie Antrieb, Versorgungseinrichtungen, Kontroll-, Steuer- und Meßgeräte, Vakuumpumpen, ggf. notwendige Ölversorgung für den Spalt des Schliffplattenpaares usw. sind aus Gründen der Übersichtlichkeit in Figur 1 nicht dargestellt.

Figur 2 zeigt einen Teilschnitt durch eine Einrichtung nach der Erfindung in Höhe einer Prüflingsaufnahme 6. Die rotierende Schliffplatte 3 liegt der ruhenden Schliffplatte 4 auf. Die rotierende Schliffplatte 3 trägt das pilzförmige Bauteil 5 und die Prüflingsaufnahme 6.

Die Prüflingsaufnahme 6 umfaßt eine Vertiefung 11 in der Schliffplatte 3, die von einem an der Schliffplatte 3 befestigten Ringflansch 12 mit dem Dichtring 13 umgeben ist. Dem Flansch 12 ist ein Gegenflansch 15 mit dem Dichtring 16 zugeordnet. Dieser ist in vertikaler Richtung beweglich, so daß ein Prüfling 17 - dargestellt ist ein Deckel - zwischen den Flanschen 12 und 15 eingespannt werden kann. Die Vertikalverstellung des Flansches 15 erfolgt pneumatisch. Dazu ist im pilzförmigen Bauteil 5 eine Zylinderkammer 18 vorgesehen, in welcher sich der mit dem Flansch 15 verbundene Kolben 19 in vertikaler Richtung auf und ab bewegt. Die Betätigung des Kolbens 19 erfolgt zum einen mit Hilfe eines Druckmittels, das über die Leitung 21 zugeführt wird. Die von Bohrungen im Bauteil 5 gebildete Leitung 21 mündet von oben in die Zylinderkammer 18 und drückt den Kolben 19 und damit den Flansch 15 nach unten. Dieses geschieht entgegen dem Druck einer Feder 22, die den Kolben nach einer Druckentlastung wieder nach oben bewegt.

Die Prüflingsaufnahme 6 ist derart ausgebildet, daß nach dem Einspannen des Prüflings 17 zwei getrennte Räume vorhanden sind. Das sind zum einen die Vertiefung 11 und zum anderen der vom Flansch 15 eingeschlossene Raum 23. In den Raum 23 mündet eine Leitung 24, die mit einer Bohrung 25 in der oberen Schliffplatte 3 in Verbindung steht. In den Raum 11 mündet unmittelbar die die Schliffplatte 3 durchsetzende Bohrung 26. Schließlich setzt sich die der Versorgung der Zylinderkammer 18 dienende Leitung 21 als die Schliffplatte 3 durchsetzende Bohrung 27 fort.

Mit einer Probenaufnahme dieser Art kann beispielsweise in sechs Takten eine Prüfung der Dichtheit des Prüflings durchgeführt werden. Diese sechs Takte sind
a: Einlegen des Prüflings in die offene Aufnahme;
b: Schließen der Aufnahme durch Zuführung von Druckmittel über die Leitung 21 in die Zylinderkammer 18; Beginn der Evakuierung der Kammern 11 und 23, indem über die Bohrungen 25, 26 Vakuumpumpen angeschlossen werden;
c: Zuführung von Testgas, z.B. Helium, über die Leitung 24 in die Kammer 23 unter gleichzeitiger Druckerhöhung durch Verbindung der Bohrung 25 mit einer Testgasquelle; Fortsetzung der Evakuierung von Kammer 11;
d: Verbindung der Bohrung 26 mit einem Testgasdetektor unter Aufrechterhaltung des niedrigen Druckes in der Kammer 11 (eigentlicher Lecksuchvorgang);
e: Belüften der Kammer 11 über die Bohrung 26; Entfernung des Testgases aus der Kammer 23 durch Verbindung der Bohrung 25 mit einer Pumpe;

f: Belüften der Kammer 23; Druckentlastung in der Zylinderkammer 18, wodurch sich die Prüflingsaufnahme infolge des Druckes der Feder 22 öffnet und der Prüfling entnommen werden kann.

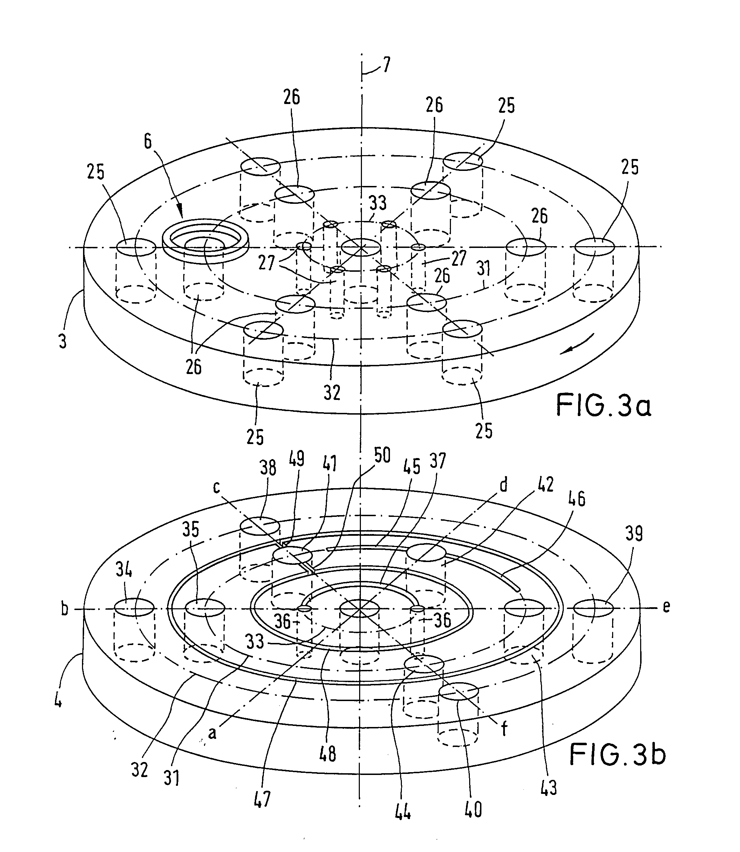

Die Figuren 3a und 3b zeigen die Ausbildung des Schliffplattenpaares 3, 4. Die obere Schliffplatte 3 trägt gleichmäßig auf einem Teilkreis 31 verteilt sechs Prüflingsaufnahmen 6 (nur eine ist dargestellt). In diese Prüflingsaufnahme münden von unten die Bohrungen 26, die ebenfalls auf dem Teilkreis 31 angeordnet sind. Jeder Prüflingsaufnahme 6 sind außerdem noch jeweils eine Bohrung 25 und 27 zugeordnet, die auf den Teilkreisen 32 bzw. 33 angeordnet sind und jeweils gemeinsam mit der Bohrung 26 auf einer radialen Linie liegen.

Die ruhende Schliffplatte 4 ist mit Bohrungen ausgerüstet, an die von unten die erforderlichen Pumpen, Versorgungseinrichtungen, Meßgeräte usw. angeschlossen sind. Die Anordnung der Bohrungen in der unteren Schliffplatte 4 ist so getroffen, daß sie während der sechs Takte der schrittweise rotierenden oberen Schliffplatte 3 eine die Durchführung Arbeitstakte wie der Lecksuche bewirkende Verbindung zwischen den Pumpen, Versorgungsgeräten, Meßgeräten usw. und der Prüflingsaufnahme herstellen.

Auf der Oberfläche der Schliffplatte 4 sind den bereits beschriebenen sechs Takten entsprechende Radiallinien a bis f und auch die Kreislinien 31, 32 und 33 gestrichelt angedeutet. Auf der Linie a befinden sich keine Bohrungen, so daß die unmittelbar darüber befindliche Prüflingsaufnahme offen ist. Ein Prüfling kann eingelegt werden.

Den über der Linie b befindlichen Bohrungen 25, 26, 27 sind Bohrungen 34, 35 und 36 zugeordnet, so daß sie mit den zugehörigen Versorgungseinrichtungen (Pumpen, Druckmittel) in Verbindung stehen. Die oben zum Takt b beschriebenen Vorgänge (Schließen der Prüflingsaufnahme, Evakuierung der Kammern 11 und 23) finden statt.

Zur Verbindung der Bohrungen 36 in der unteren Schliffplatte 4 mit den zugehörigen Bohrungen 27 in der oberen Schliffplatte 3 (für diejenigen Taktzeiten, in denen die Prüflingsaufnahme geschlossen ist), ist in der Oberfläche der unteren Schliffplatte, und zwar auf der Kreislinie 33 eine Nut 37 vorgesehen, die sich über die entsprechenden Takte, hier über 180_{°}, erstreckt. Bei allen oberhalb der Radiallinien b, c, d und e befindlichen Prüflingsaufnahmen 6 ist deshalb sichergestellt, daß sie geschlossen sind. Nur zwei Bohrungen 36 sind deshalb vorgesehen. Prinzipiell würde sogar nur eine Bohrung 36 ausreichen.

Die weiteren Bohrungen 38, 39 und 40 in der Schliffplatte 4 auf der Kreislinie 32 dienen der Heliumzufuhr, Evakuierung und schließlich Belüftung der Kammern 23 in den Probenaufnahmen 6. Die Bohrungen 41 und 42 dienen dem Anschluß der Kammern 11 an eine Vakuumpumpe (wie Bohrung 35) und an einen Testgasdetektor. Über die Bohrungen 43, 44 erfolgt die Belüftung der Kammern 11.

Beim oben beschriebenen Verfahren hat der eigentliche Lecksuchvorgang die Dauer eines Taktes. Beträgt eine Taktzeit beispielsweise etwa vier Sekunden, wobei sich die obere Schliffplatte 3,5 Sekunden in ihrer Ruhestellung befindet und 0,5 Sekunden für ihre Drehbewegung benötigt, dann stehen 3,5 Sekunden für die Lecksuche zur Verfügung. Diese Zeit reicht beispielsweise für eine wirksame Vakuum-Helium-Lecksuche aus. Diese Zeit kann verlängert werden, wenn der Bohrung 42 auf der Kreislinie 31 liegende Nuten 45 und 46 in der Oberfläche der Schliffplatte 4 zugeordnet sind, welche jedoch keine Verbindung zu den Bohrungen 41 und 43 haben. Dadurch stehen auch die Bewegungszeiten zwischen den Takten c, d und e der Lecksuche nahezu noch vollständig zur Verfügung, beim oben beschriebenen Zeitbeispiel als nahezu 4,5 Sekunden. Die Nutenabschnitte 45, 46 können auch in die Unterseite der Schliffplatte 3 eingelassen sein.

Die Oberfläche der Schliffplatte 4 (oder auch die Unterseite der Schliffplatte 3) ist schließlich noch mit zwei kreisringförmigen Nuten 47, 48 ausgerüstet, die zwischen den Kreislinien 31, 32 bzw. 31, 33 liegen. Durch Quernuten 49, 50 stehen diese ständig mit der Bohrung 41 in Verbindung, welche ihrerseits mit einer Vakuumpumpe verbunden ist. Während des Betriebs wird deshalb in den Nuten 47, 48 ständig ein Vakuum aufrechterhalten, so daß eine sichere Trennung der auf den einzelnen Linien 31, 32 und 33 liegenden Bohrungen sichergestellt ist. Eine Kurzschluß-Testgasströmung im Bereich der Auflage der Schliffplatten ist dadurch wirksam verhindert.

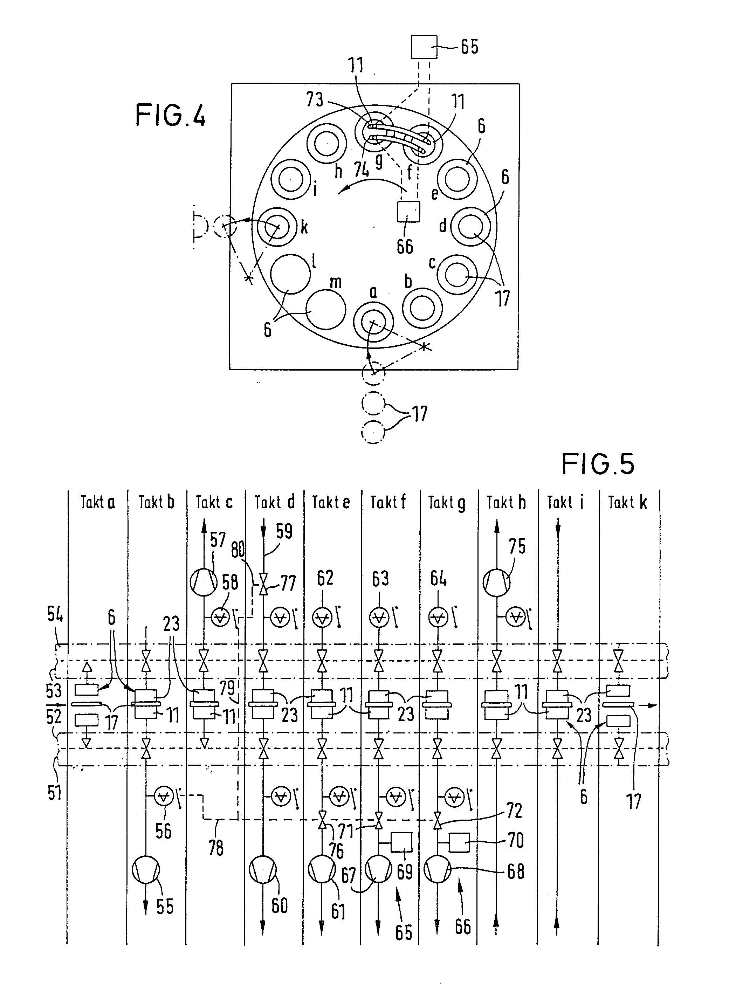

Die Figuren 4 und 5 zeigen ein Ausführungsbeispiel mit zwölf Probenaufnahmen 6, wobei Figur 5 die während der Takte ablaufenden Vorgänge nach Art einer Abwicklung zeigt. Unterschiedlich gegenüber den Ausführungsbeispielen nach den Figuren 1 bis 3 ist außerdem, daß zwei Schliffplattenpaare 51, 52 und 53, 54 zur Übernahme von Ventilfunktionen vorgesehen sind. Die jeweils gleichförmig schrittweise rotierenden Schliffplatten 52, 53 sind einander zugewandt und tragen die Prüflingsaufnahmen 6. An die äußeren, ruhenden Schliffplatten 51, 54 sind die zugehörigen Versorgungsgeräte angeschlossen.

Im einzelnen läuft die Lecksuche an den Prüflingen 17 folgendermaßen ab:
Takt a: Der Prüfling 17 wird in die Probenaufnahme 6 eingelegt und fixiert.
Takt b: Die Probenaufnahme 6 wird - ähnlich wie zu Figur 2 beschrieben - derart geschlossen, daß zwei getrennte Kammern 11 und 23 entstehen. Die Betätigung der Probenaufnahme kann pneumatisch, hydraulisch oder auch mechanisch sein. Die Kammer 11 wird über das Schliffplattenpaar 51, 52 - symbolisch dargestellt ist jeweils das Zeichen eines Ventiles - mit einer Vakuumpumpe 55 verbunden. Außerdem ist ein Drucksensor 56 vorgesehen. Dieser erzeugt nach dem Erreichen eines vorgeschriebenen Druckes ein Signal, so daß kontrollierbar ist, ob sich ein Prüfling in der Prüflingsaufnahme 6 befindet.
Takt c: Über das Schliffplattenpaar 53, 54 wird der Raum 23 mit der Vakuumpumpe 57 verbunden. Auch für diesen Evakuiervorgang ist ein Drucksensor 58 vorgesehen.
Takt d: Die Kammer 23 wird über die Leitung 59 mit Testgas, vorzugsweise einem Helium-StickstoffGemisch, geflutet. Zweckmäßig ist damit eine Druckerhöhung verbunden, und zwar auf einen etwas über dem Atmopsphärendruck liegenden Druck. Die Kammer 11 wird weiterhin mit Hilfe der Pumpe 60 evakuiert. Beide Schritte erfolgen druckkontrolliert.
Takt e: In der Kammer 11 wird mit Hilfe der Vakuumpumpe 61 der erforderliche Prüfdruck erreicht. Der Druck in der Kammer 23 wird mit Hilfe des Drucksensors 62 überwacht.
Takte f und g: Während der Zeit dieser Takte erfolgt die eigentliche Messung der Heliumleckrate. Der Druck in der Kammer 23 wird mit Hilfe der Drucksensoren 63, 64 überwacht. Zur Feststellung von Lecks sind zwei separate Systeme 65, 66 vorgesehen, die jeweils eine Vakuumpumpe 67, 68 und einen Testgasdetektor 69, 70, beim Einsatz von Helium als Testgas vorzugsweise jeweils ein Massenspektrometer, umfassen. Beide Systeme 65, 66 sind über von den Schliffplatten 51, 52 gebildete Ventile an je eine Kammer 11 über beide Takte angeschlossen. Erreicht wird das durch zweireihige Anordnung der Prüfteile, wobei der Abstand der Prüfteile in jeder Reihe 2 x Schaltwinkel beträgt und die Prüfteilreihen wiederum um den Schaltwinkel gegeneinander versetzt sind. Mit dieser Anordnung läßt sich das Lochbild in der unteren Schliffplatte so gestalten, daß über 2 Positionen ohne Unterbrechung geprüft werden kann und eine Beeinflussung der Prüfteile untereinander ausgeschlossen ist. Dadurch ist es möglich, die Lecksuche an den Prüflingen auf zwei Taktzeiten auszudehnen (minus einer Umschaltzeit) . Hierzu wird auf Figur 4, Takte f und g hingewiesen. An die Kammern 11 sind über separate, zweireihig angeordnete Bohrungen, die die Bohrung 26 ersetzen, die Systeme 65 und 66 angeschlossen. Mit Hilfe von von den Schliffplatten 3 und 4 gebildeten Ventilen kann sichergestellt werden, daß bei einem ersten Prüfling, der die Takte f und g durchläuft, nur das System 65 an die Kammern 11 angeschlossen ist, während beim nachfolgenden Prüfling nur das System 66 an die Kammern 11 angeschlossen ist. Die Prüfzeit kann außerdem noch dadurch verlängert werden, daß im Bereich der einander berührenden Oberflächen der Schliffplatten 51 und 52 Nuten 73, 74 vorgesehen sind. Generell gilt, daß bei zweireihiger Anordnung von Prüfteilen die Taktzeit halbiert, bei mehrreihiger Anordnung entsprechend weiter reduziert werden kann.
Takt h: Die Kammer 11 wird belüftet. Aus der Kammer 23 wird mittels der Pumpe 75 das Testgas abgepumpt. Es wird entweder zum Testgasreservoir zurückgeführt oder abgeblasen.
Takt i: Auch die Kammer 23 wird belüftet.
Takt k: Die Prüflingsaufnahme 6 wird geöffnet und der Prüfling 17 entnommen.

Die Takte I und m sind in Fig. 5 nicht dargestellt. Es besteht die Möglichkeit, in diesen Takten eine optische Prüfung vorzunehmen, mit deren Hilfe festgestellt wird, ob die Prüflingsaufnahme leer ist. Auch eine andere, eventuell zusätzlich noch erforderlich werdende Aufgabe können diese Takte übernehmen.

Bei den Takten d, e, f und g sind separate Ventile 71, 72, 76, 77 vorgesehen. Die Betätigung dieser Ventile kann in Abhängigkeit von Drucksensoren 56, 58 erfolgen, d.h., wenn mit Hilfe dieser Drucksensoren festgestellt worden ist, daß ein Prüfling entweder nicht vorhanden oder grob undicht ist. Gestrichelt eingezeichnet sind die Signalleitungen 78, 79, 80 die von den Druckwächtern 56, 58 zu den Ventilen 71, 72, 76, 77 führen. Wurde beispielsweise ein Prüfling bereits als grob undicht registriert, dann liefern die Druckwächter geeignete Signale, so daß sich die Ventile 71, 72, 76, 77 - zum richtigen Zeitpunkt - schließen oder garnicht erst öffnen, so daß die nachfolgenden, für die Durchführung der empfindlichen Lecksuche notwendigen Schritte nicht ausgeführt werden.

## Patentansprüche

1. Anwendung der Schliffplattenventiltechnik bei Lecksucheinrichtungen.

2. Einrichtung zur Feststellung von Lecks in der Wandung eines offenen Prüflings (17) mit einer der Form des Prüflings angepaßten, mit Dichtmitteln ausgerüsteten Aufnahme (16), in welcher bei ordnungsgemäß eingesetztem Prüfling zwei durch die auf Lecks zu prüfende Wandung getrennte Räume (11, 23) vorhanden sind, wobei den Räumen Ventile zum Anschluß von Pumpen, Meß- oder Überwachungsgeräten, Versorgungsgeräten und/oder dergleichen zugeordnet sind, dadurch gekennzeichnet, daß die Einrichtung mit mehreren Prüflingsaufnahmen (6) ausgerüstet ist und daß mindestens ein Schliffplattenpaar (3, 4; 51, 52; 53, 54) zur Übernahme von Ventilfunktionen vorgesehen ist.

3. Einrichtung nach Anspruch 2, dadurch gekennzeichnet, daß nur ein Schliffplattenpaar (3, 4) vorhanden ist, daß eine erste, ruhende Schliffplatte (4) vorhanden ist, an die Gaszu- und Abführungsleitungen angeschlossen sind, daß die zweite rotierende Schliffplatte (3) die Prüflingsaufnahmen (6) trägt und daß beide Schliffplatten (3, 4) mit Bohrungen ausgerüstet sind, die bei rotierender zweiter Schliffplatte (3) zeitweise einander überdecken sowie zeitweise voneinander getrennt sind und damit die Funktion von Ventilen haben.

4. Einrichtung nach Anspruch 3, dadurch gekennzeichnet, daß entsprechend der Anzahl der Prüflingsaufnahmen bzw. Takte in der oberen Schliffplatte Gruppen von Bohrungen (25, 26, 36) vorgesehen sind, die auf radialen Linien (a bis f bzw. a bis m) und auf Teilkreisen (31, 32, 33) liegen.

5. Einrichtung nach Anspruch 4, dadurch gekennzeichnet, daß die untere, ruhende Schliffplatte (4) mit Bohrungen ausgerüstet ist, die auf korrespondierenden Radialen und Teilkreisen liegen und über die die Prüflingsaufnahmen (6) während der zugehörigen Takte versorgt werden.

6. Einrichtung nach Anspruch 5, dadurch gekennzeichnet, daß in die Bohrung (42), an die der Testgasdetektor angeschlossen ist, Nutenabschnitte (45, 46) münden, die auf den zugehörigen Teilkreisen (31) angeordnet sind.

7. Einrichtung nach einem der Ansprüche 4, 5 oder 6, dadurch gekennzeichnet, daß mindestens zwischen den Testgaszuführungsbohrungen (38, 25) und den Bohrungen (26, 42), über die ein Testgasdetektor anschließbar ist, eine kreisringförmige Nut (47) vorgesehen ist.

8. Einrichtung nach Anspruch 7, dadurch gekennzeichnet, daß zwei kreisringförmige Nuten (47, 48) vorgesehen sind.

9. Einrichtung nach Anspruch 7 oder 8, dadurch gekennzeichnet, daß die kreisringförmigen Nuten (47, 48) über Nutenabschnitte (49, 50) mit einer Bohrung (41) in Verbindung stehen, an die eine Vakuumpumpe angeschlossen ist.

10. Einrichtung nach einem der vorhergehenden Ansprüche, dadurch gekennzeichnet, daß zwei Schliffplattenpaare (51, 52; 53, 54) vorgesehen und übereinander angeordnet sind und daß die jeweils rotierenden Schliffplatten einander zugewandt sind und die Prüflingsaufnahmen (6) tragen.

11. Einrichtung nach einem der vorhergehenden Ansprüche, dadurch gekennzeichnet, daß zwei oder mehr separate Systeme (65, 66) vorgesehen sind, die jeweils aus einer Vakuumpumpe (67, 68) und einem Testgasdetektor (69, 70) bestehen, und daß die zugehörigen Prüfteilanschlüsse zwei- oder mehrreihig angeordnet sind.

12. Einrichtung nach Anspruch 11, dadurch gekennzeichnet, daß zwei Lecksuchsysteme (65, 66) vorhanden sind, die über Ventile derart an zwei Prüflingsaufnahmen anschließbar sind, daß die Lecksuche alternierend durchgeführt und auf zwei Taktzeiten ausgedehnt werden kann.

13. Einrichtung nach einem der vorhergehenden Ansprüche, dadurch gekennzeichnet, daß Druckkontrollgeräte (56, 58) vorgesehen sind, über die feststellbar ist, ob ein Prüfling grob undicht oder nicht vorhanden ist.

14. Verfahren zum Betrieb einer Einrichtung nach den vorhergehenden Ansprüchen, dadurch gekennzeichnet, daß die rotierende(n) Schliffplatte (n) (3, 52, 53) schrittweise mit einer bestimmten Taktzahl rotiert bzw. rotieren, daß in einem ersten Takt (a) der Prüfling in die Prüflingsaufnahme eingesetzt wird, daß in weiteren Takten eine Lecksuche am Prüfling (17) durchgeführt wird und daß in einem letzten Takt (f, k) der Prüfling aus der Probenaufnahme (6) entnommen wird.

15. Verfahren nach Anspruch 14, dadurch gekennzeichnet, daß der eigentliche Lecksuchvorgang alternierend mit zwei oder mehr separaten Systemen (65, 66) ausgeführt wird.
